(19) **Europäisches Patentamt**
**European Patent Office**
**Office européen des brevets**

(11) **EP 2 620 722 B1**

(12) **EUROPEAN PATENT SPECIFICATION**

(45) Date of publication and mention
of the grant of the patent:
**24.04.2019 Bulletin 2019/17**

(51) Int Cl.:
*F25B 1/02* (2006.01)          *F25B 5/02* (2006.01)
*F25B 49/02* (2006.01)         *F04B 35/04* (2006.01)
*F25B 1/10* (2006.01)

(21) Application number: **13153059.4**

(22) Date of filing: **29.01.2013**

(54) **Apparatus for controlling compressor and refrigerator having the same**

Vorrichtung zum Steuern eines Kompressors und Kühlschrank damit

Appareil de commande de compresseur et réfrigérateur le comportant

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.01.2012 KR 20120009087**

(43) Date of publication of application:
**31.07.2013 Bulletin 2013/31**

(73) Proprietor: **LG Electronics Inc.**
**Yeongdeungpo-gu**
**SEOUL,**
**07336 (KR)**

(72) Inventors:
• **Yoo, Jaeyoo**
  **Seoul (KR)**

• **Nah, Taewoong**
  **Seou (KR)**
• **Park, Sungho**
  **Seoul (KR)**

(74) Representative: **Ter Meer Steinmeister & Partner**
**Patentanwälte mbB**
**Nymphenburger Straße 4**
**80335 München (DE)**

(56) References cited:
**EP-A1- 2 058 937     US-A1- 2007 056 300**

• **"KR 10-20 05-01 11283 A (LG ELECTRONICS
INC)", 24 November 2005 (2005-11-24),
XP55090986, * the whole document ***

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the invention

The present disclosure relates to a compressor control apparatus for controlling the operation of two compressors using one inverter and a refrigerator comprising the same.

2. Description of the related art

In general, compressor is an apparatus for converting mechanical energy into compression energy of a compression fluid and used as part of a freezing device, such as a refrigerator, an air conditioner or the like.

Compressors may be divided into a reciprocating compressor, a rotary compressor, and a scroll compressor. The reciprocating compressor forms a compression space between a piston and a cylinder to inhale or discharge a working gas, thereby compressing refrigerant while moving in a linear reciprocating manner. The rotary compressor forms a compressor space between an eccentrically rotated roller and a cylinder to inhale or discharge a working gas, thereby compressing refrigerant while the roller is eccentrically rotated along an inner wall of the cylinder. The scroll compressor forms a compression space between an orbiting scroll and a fixed scroll to inhale or discharge a working gas, thereby compressing refrigerant while the orbiting scroll is rotated along the fixed scroll.

The reciprocating compressor allows an inner piston to move in a linear reciprocating manner within the cylinder, thereby inhaling, compressing and discharging a refrigerant gas. The reciprocating compressor is largely divided into a recipro type and a linear type depending on how the piston is driven.

The recipro type reciprocating compressor is a scheme in which a crank shaft is coupled to a rotating motor and a piston is coupled to the crank shaft, thereby converting a rotational movement into a linear reciprocating movement. On the contrary, the linear type reciprocating compressor is a scheme in which a piston is connected to a linearly moving mover of the motor, thereby converting a linear movement of the motor into a reciprocating movement of the piston.

The reciprocating compressor may include an electric power unit for generating a driving force, and a compression unit for receiving the driving force from the electric power unit to compress a fluid. A motor is typically used for the electric power unit, and a linear motor is used in case of the linear type.

For the linear motor, the motor itself directly generates a linear driving force, and thus a mechanical conversion device is not required, and the structure thereof is not complicated. Furthermore, the linear motor may reduce loss due to energy conversion, and there is no connecting portion causing friction and abrasion, thereby greatly reducing noise. Furthermore, when a linear type reciprocating compressor (hereinafter, referred to as a "linear compressor") is used for a refrigerator or air conditioner, a stroke voltage applied to the linear compressor may be changed to change the compression ratio, thereby providing an advantage that the linear compressor can be used for variable freezing capacity control.

On the other hand, since a reciprocating compressor, particularly, linear compressor, performs a reciprocating movement in a state that the piston is not mechanically restricted in the cylinder, the piston may collide with the cylinder wall or the piston cannot move forward due to a large load when voltage is suddenly and excessively applied, thereby causing difficulty in properly performing the compression. Accordingly, a control apparatus for controlling the movement of the piston for the variation of a load or voltage is essentially required.

In general, a compressor control apparatus detects voltage and current applied to the compressor motor and estimates a stroke with a sensorless method to perform feedback control. At this time, the compressor control apparatus may include a triac or inverter as a means for controlling the compressor.

A compressor control apparatus to which the inverter is applied typically has controlled only one compressor using one inverter. For example, in case of a refrigerator having a freezing chamber and a refrigerating chamber, two inverters are used to perform independent control, thereby implementing a refrigerant cycle for each chamber.

KR 10-2005-0111283 describes an apparatus having three compressors and one inverter wherein additional switching units are provided in front of each compressor which is controlled by a control unit and provided with drive signals by the one inverter.

SUMMARY OF THE INVENTION

According to the embodiments of the present disclosure, an object is to provide a compressor control apparatus capable of operating two compressors using one inverter in a separate or simultaneous manner, and a refrigerator including the same. According to the invention, this object is achieved by a compressor control apparatus and a control method as set out in claim 1 and claim 9, respectively.

According to the embodiments of the present disclosure, another object is to provide a compressor control apparatus for varying the frequencies of switching elements constituting an inverter in operating two compressors using one inverter to enable simultaneous operation and a refrigerator including the same.

Preferably the compressor control apparatus according to an embodiment may include one inverter provided with three pairs of switching elements in which one pair of the three pairs of switching elements is commonly connected to a first and a second compressor, and switched based on drive signals for each pair of switching elements, and a control unit configured to generate an inverter control signal configured with the drive signals based on a load state of the first and the second compressor and output it to the one inverter, wherein a drive signal for the commonly connected one pair of switching elements has a frequency slower than those of drive signals for the other pairs of switching elements.

In the compressor control apparatus, the control unit according to the invention is configured such that the drive signal for the commonly connected one pair of switching elements has an operating frequency.

Furthermore, a compressor control apparatus according to an embodiment may further include a converter configured to rectify commercial alternating current power to direct current power, a smoothing unit configured to smoothen and store the rectified direct current power, and a drive unit configured to receive the inverter control signal and output the drive signals to the one inverter.

A refrigerator according to an embodiment may include a refrigerator body, a first and a second compressor provided in the refrigerator body to compress refrigerant, respectively, one inverter provided with three pairs of switching elements, and switched based on drive signals for each pair of switching elements, a first and a second load detection unit configured to detect a load of the first and the second compressor, and a control unit configured to generate an inverter control signal configured with the drive signals based on a load state of the first and the second compressor and output it to the one inverter. Here, one pair of the three pairs of switching elements provided in the one inverter may be commonly connected to the first and the second compressor, and switched at an operating frequency.

According to the invention, the control unit is configured such that drive signals for the other pairs of switching elements have carrier frequencies of the first and the second compressor, respectively.

Preferably, the refrigerator, further comprising: a converter configured to rectify commercial alternating current power to direct current power; a smoothing unit configured to smoothen and store the rectified direct current power; and a drive unit configured to receive the inverter control signal and output the drive signals to the one inverter.

According to the embodiments of the present disclosure, the operation of two compressors may be controlled using one inverter, thereby minimizing the use of elements as well as increasing the compressor capacity and enhancing the operation efficiency of a system.

According to the embodiments of the present disclosure, a plurality of operation modes may be used to correspond to a load or freezing capacity using two compressors. Furthermore, according to the present disclosure, two compressors may be operated in a separate or simultaneous manner using one inverter, thereby simplifying the configuration of a system to reduce the cost.

According to the embodiments of the present disclosure, switching elements commonly used may be switched at an operating frequency contrary to the other switching elements in operating two compressors using one inverter, thereby allowing the simultaneous operation of two compressors, reducing the switching loss, and improving the efficiency and stability of a system.

BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

FIGS. 1 and 2 are views schematically illustrating the configuration of a compressor control apparatus according to the embodiments of the present disclosure;

FIG. 3 is a circuit diagram schematically illustrating a compressor control apparatus in FIG. 1 or 2;

FIGS. 4A and 4B are views for explaining the operation of controlling the working of a first compressor of the two compressors according to the embodiments of the present disclosure;

FIG. 5 is a view illustrating a switching frequency of the switching elements connected to a first compressor of the two compressors;

FIGS. 6A and 6B are views for explaining the operation of controlling the working of a second compressor of the two compressors according to the embodiments of the present disclosure;

FIG. 7 is a view illustrating a switching frequency of the switching elements connected to a second compressor of the two compressors;

FIGS. 8A through 9B are views for explaining the operation of simultaneously operating two compressors according to the embodiments of the present disclosure;

FIG. 10 is a view illustrating a switching frequency of the switching elements when two compressors are simultaneously operated;

FIG. 11 is a flow chart schematically illustrating a compressor control method according to an embodiment;

FIG. 12 is a cross-sectional view illustrating a linear compressor having a compressor control apparatus according to the embodiments of the present disclosure; and

FIG. 13 is a perspective view illustrating a refrigerator to which the linear compressor in FIG. 12 is applied.

DETAILED DESCRIPTION OF THE INVENTION

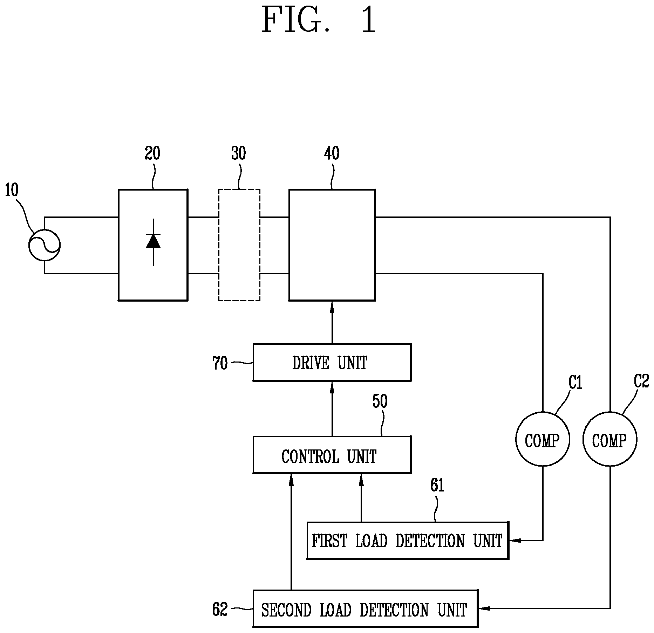

Referring to FIGS. 1 through 3, a compressor control apparatus according to an embodiment may include one inverter 40 provided with three pairs of switching elements in which one pair of the three pairs of switching elements is commonly connected to a first and a second compressor (C1, C2), and switched based on drive signals for each pair of switching elements, and a control unit 50 configured to generate an inverter control signal configured with the drive signals based on a load state of the first and the second compressor (C1, C2) and output it to the one inverter 40. The inverter 40 may further include freewheeling diodes connected in parallel to three pairs of switching elements (S1 to S6).

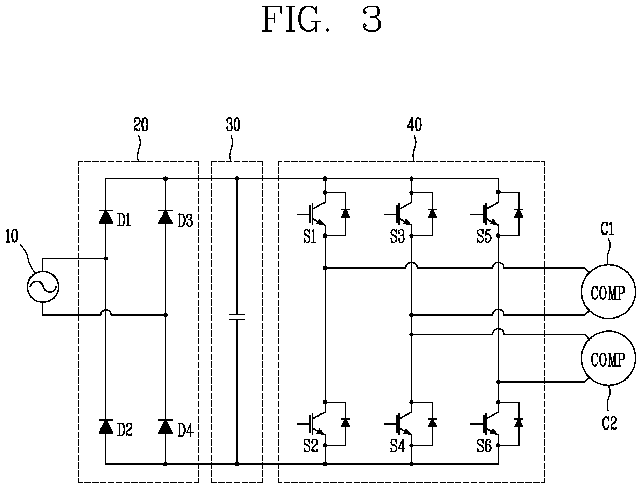

Here, referring to FIG. 3, a drive signal for the commonly connected one pair of switching elements (S3, S4) has a frequency slower than those of drive signals for the other pairs of switching elements (S1, S2, S5, S6). In particular, the control unit 50 may be configured such that the drive signal for the commonly connected one pair of switching elements (S3, S4) has an operating frequency. For each drive signal, space vector pulse width modulation (SVPWM) or the like may be typically used as a PWM signal. In other words, one pair of switching elements (S3, S4) commonly connected thereto may be switched at an operating frequency, and a drive signal for the other switching elements (S1, S2, S5, S6) may have a PWM carrier frequency for operating each compressor.

Here, at least one of the first and the second compressor (C1, C2) may be a reciprocating compressor, particularly, a linear compressor. Furthermore, the two compressors may be configured to have different capacities. The first and the second compressor may be operated in a simultaneous manner or operated in a separate manner, respectively, by a compressor control apparatus using one inverter. It may be merely defined as a compressor operation mode. The compressor operation mode is an operation mode determined by a load or required freezing capacity of the first and the second compressor. The compressor operation mode may be an operation mode for controlling the stroke, frequency or the like of each compressor by dividing it into a predetermined value. Here, the compressor operation mode may be merely divided into a separate operation mode of the first compressor, a separate operation mode of the second compressor, and a simultaneous operation mode of the first and the second compressor.

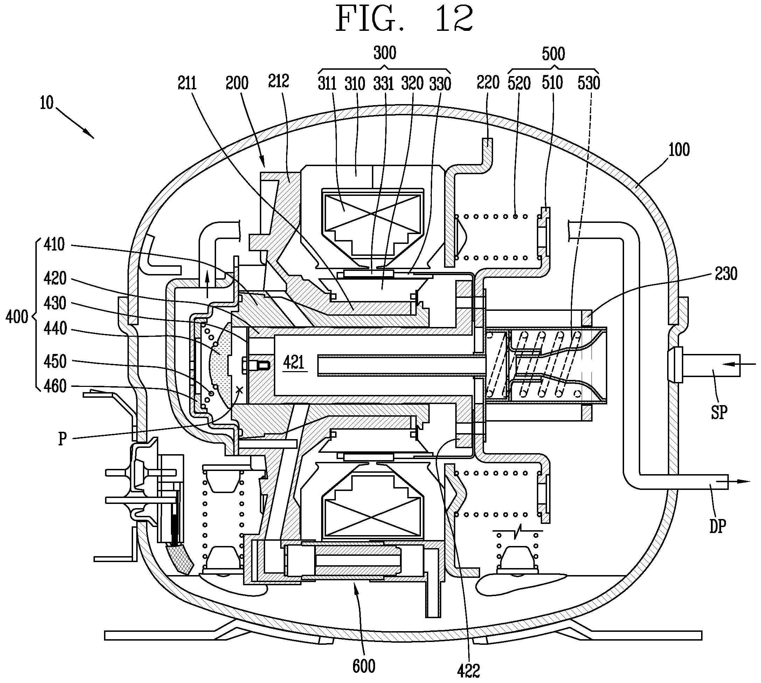

Referring to FIG. 12, the first and the second compressor may include a casing 100 communicated with a gas suction pipe (SP) and a gas discharge pipe (DP), a frame unit 200 elastically supported by an inner portion of the casing 100, a motor 300 supported by the frame unit 200 to allow a mover 330 to perform a linear reciprocating movement, a compression unit 400 in which a piston 420 is coupled to the mover 330 of the motor 300 and supported by the frame unit 200, a plurality of resonant units 500 for elastically supporting the mover 330 of the motor 300 and the piston 420 of the compression unit 400 in the movement direction to induce a resonant movement.

The frame unit 200 may include a first frame 210 by which the compression unit 400 is supported and which supports a front side of the motor 300, a second frame 220 coupled to the first frame 210 to support a rear side of the motor 300, and a third frame 230 coupled to the second frame 220 to support a plurality of resonant springs 530. The first frame 210, second frame 220, and third frame 230 may be all formed of a non-magnetic body, such as aluminium, to reduce core loss.

Furthermore, the first frame 210 is formed with a frame portion 211 having a ring plate shape, a cylinder portion 212 having a cylindrical shape into which a cylinder 410 is inserted is formed on a rear surface, namely, lengthwise as an integral body in the motor direction, at the center of the frame portion 211. The frame portion 211 is preferably formed such that the outer diameter of the frame portion 211 is at least not less than the inner diameter of the outer stator 310 of the motor 300 to support both an outer stator 310 and an inner stator 320.

Furthermore, the first frame 210 is fixed such that the inner stator 320 is inserted into an outer circumferential surface of the cylinder portion 212. In this case, the first frame 210 is preferably formed of a non-magnetic body, such as aluminium, to reduce magnetic loss. Furthermore, the cylinder portion 212 may be formed on the cylinder 410 as an integral body using an insert die casting method. However, the cylinder portion 212 may be screw-assembled such that the cylinder 410 is pressurized or a screw thread is formed at an inner circumferential surface thereof. Furthermore, it may be preferable in the stability aspect of the cylinder 410 that a step surface or inclined surface is formed between a front side inner circumferential surface and a rear side inner circumferential surface of the cylinder portion 212, thereby allowing the cylinder 410 coupled to an inner circumferential surface of the cylinder portion 212 to be supported in the piston direction.

The motor 300 may include an outer stator 310 supported between the first frame 210 and second frame 220 and around which a coil 311 is wound, an inner stator 320 coupled to an inner side of the outer stator 310 with a predetermined interval and inserted into the cylinder portion 212, and a mover 330 in which a magnet 331 is provided to correspond to the coil 311 of the outer stator 310 to perform a linear reciprocating movement along the magnetic flux direction between the outer stator 310 and inner stator 320. The outer stator 310 and inner stator 320 are formed by laminating a plurality of thin stator core sheets in a cylindrical shape for each sheet or laminating a plurality of thin stator core sheets in a block shape and laminating the stator block in a radial shape.

The compression unit 400 may include a cylinder 410 formed on the first frame 210 as an integral body, a piston 420 coupled to the mover 330 of the motor 300 to perform a reciprocating movement in the compression space (P) of the cylinder 410, a suction valve 430 mounted at a front end of the piston 420 to control the suction of the refrigerant gas while opening or closing the suction passage 421 of the piston 420, a discharge valve 440 mounted at a discharge side of the cylinder 410 to control the suction of the compression gas while opening or closing the compression space (P) of the cylinder 410, a valve spring 450 elastically supporting the discharge valve 440, and a discharge cover 460 fixed to the first frame 210 at a discharge side of the cylinder 410 to accommodate the discharge valve 440 and valve spring 450.

The cylinder 410 is formed in a cylindrical shape and inserted and coupled to the cylinder portion 212 of the first frame 210.

The cylinder 410 may be formed of a material having a hardness higher than that of cast iron or at least that of the first frame 210, more accurately, that of the cylinder portion 212 by considering abrasion due to the piston 420 as forming a bearing surface with the piston 420 an inner circumferential surface of which is made of cast iron.

The piston 420 may be preferably formed of the same material as the cylinder 410 or formed of a material having a hardness similar to that of the cylinder 410 to reduce abrasion with the cylinder 410. Furthermore, the suction passage 421 is formed in a penetrated manner within the piston 420 such that refrigerant is inhaled into the compression chamber (P) of the cylinder 410.

The resonant unit 500 may include a spring supporter 510 coupled to a connecting portion between the mover 330 and the piston 420, first resonant springs 520 supported at a front side of the spring supporter 510, and second resonant springs 530 supported at a rear side of the spring supporter 510.

In the drawing, non-described reference numeral 422 denotes a piston connecting portion and non-described reference numeral 600 denotes an oil feeder.

When power is applied to the motor 300 and a magnetic flux is formed between the outer stator 310 and inner stator 320, the mover 330 placed at a gap between the outer stator 310 and inner stator 320 continuously performs a reciprocating movement by the resonant unit 500 while moving along the direction of the magnetic flux. Furthermore, when the piston 420 performs a backward movement within the cylinder 410, refrigerant filled in an inner space of the casing 100 passes through the suction passage 421 of the piston 420 and the suction valve 430 and inhaled into the compression space (P) of the cylinder 410. When the piston 420 performs a forward movement within the cylinder 410, refrigerant gas inhaled into the compression space (P) is compressed to repeat a series of processes of discharging while opening the discharge valve 440.

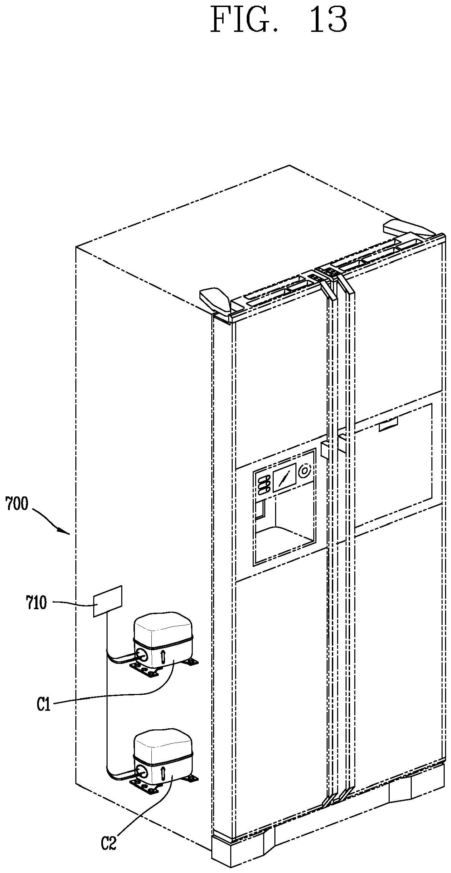

A linear compressor according to the embodiments of the present disclosure may include a compressor control apparatus as described below. Furthermore, the linear compressor may be widely used for a freezing device such as a refrigerator or air conditioner. When the first and the second compressor are applied to a refrigerator as illustrated in FIG. 13, it may be designed such that each compressor takes charge of the refrigerating chamber and freezing chamber, respectively.

Referring to FIG. 13 together with FIGS. 1 through 3, a refrigerator 700 according to an embodiment may include a refrigerator body, a first and a second compressor provided in the refrigerator body to compress refrigerant, respectively, one inverter provided with three pairs of switching elements, and switched based on drive signals for each pair of switching elements, a first and a second load detection unit configured to detect a load of the first and the second compressor, and a control unit configured to generate an inverter control signal configured with the drive signals based on a load state of the first and the second compressor and output it to the one inverter. Here, one pair of the three pairs of switching elements provided in the one inverter is commonly connected to the first and the second compressor, and switched at an operating frequency.

Referring to FIG. 13, the refrigerator 700 is provided with a main board 710 therein for controlling the entire operation of the refrigerator, and connected to the first and the second compressor (C1, C2). The compressor control apparatus may be provided in the main board 710. The refrigerator 700 is operated by driving the first and the second compressor. Cool air supplied to an inner portion of the refrigerator is generated by the operation of heat exchange with refrigerant, and continuously supplied to an inner portion of the refrigerator while repeatedly performing compression-condensation-expansion-evaporation cycles. The supplied refrigerant is uniformly transferred to an inner portion of the refrigerator by convection, thereby allowing foods within the refrigerator to be stored at a desired temperature.

A compressor control apparatus according to an embodiment may further include a converter 20 configured to rectify commercial alternating current power 10 to direct current power, a smoothing unit 30 configured to smoothen and store the rectified direct current power, and a drive unit 70 configured to receive the inverter control signal and output the drive signals to the one inverter. For example, the drive unit 70 outputs an input voltage, namely, gate voltage, to switching elements, when the switching elements of the inverter are IGBTs or the like, based on the inverter control signal. Referring to FIG. 3, the converter 20 may be a full bridge converter including two pairs of diodes (D1, D2, D3, D4).

Referring to FIG. 1, the compressor control apparatus may further include a first and a second load detection unit 61, 62 configured to detect a load of the first and the second compressor. Here, the control unit 50 generates a control signal controlling the inverter 40 based on the load. In other words, the control unit 50 generates the inverter control signal based on the load of the first and the second compressor (C1, C2) to operate the first and the second compressor in a separate or simultaneous manner. The control unit 50 generates the inverter control signal using a first and a second stroke of the first and the second compressor (C1, C2), and stroke instruction values for the first and the second compressor. Here, the load of the compressor may include a motor current, a motor voltage, a stroke, their phase difference, a frequency, and the like. For example, when a compressor is provided in a refrigerator, the load of the compressor may be detected using a load of the refrigerator.

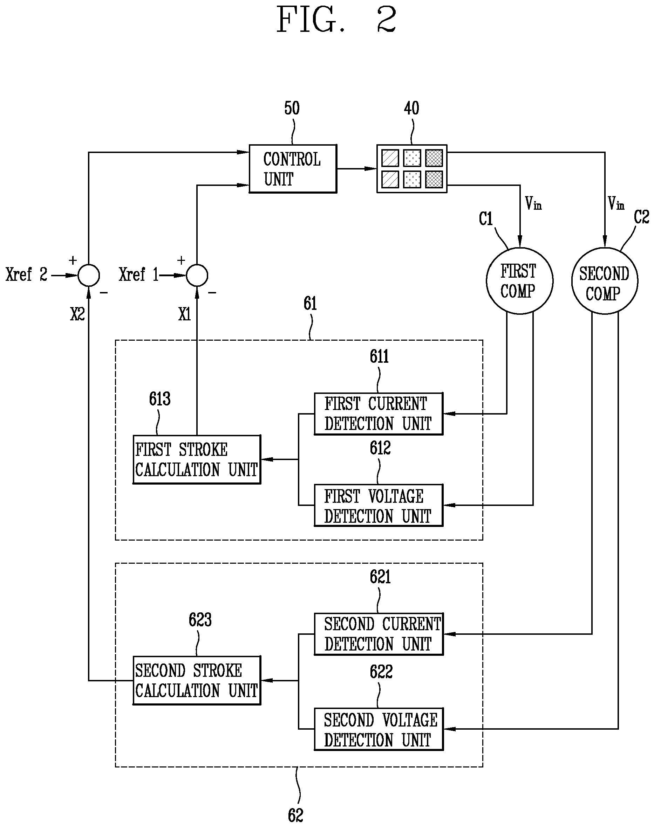

Referring to FIG. 2, the compressor control apparatus may further include a first current detection unit 611 configured to detect a first motor drive current applied to a first motor provided in the first compressor (C1) and a first voltage detection unit 612 configured to detect a first motor drive voltage applied to the first motor. Furthermore, the compressor control apparatus may further include a second current detection unit 621 configured to detect a second motor drive current applied to a second motor provided in the second compressor (C2) and a second voltage detection unit 622 configured to detect a second motor drive voltage applied to the second motor.

The first and the second current detection unit 611, 621 detect a drive current applied to the compressor based on a load of the compressor or a load of the freezer. The current detection units detect a motor current applied to the compressor motor. The first and the second voltage detection unit 612, 622 detect a motor voltage applied to the compressor. The voltage detection units detect a motor voltage applied between both ends of the compressor motor based on a load of the compressor.

The compressor control apparatus according to the embodiments may further include a first and a second stroke calculation unit 613, 623 configured to calculate a first and second stroke of the first and the second compressor, respectively, using the motor drive current and the motor drive voltage. The relationship among the motor voltage, motor current, and stroke is as follows. The first and the second stroke calculation unit 613, 623 may calculate a stroke using the following equation based on a motor voltage detected through the first and the second voltage detection unit 612, 622, and a motor current detected through the first and the second current detection unit 611, 621.

[Equation 1]

$$x = \frac{1}{\alpha} \int \left( Vm - Ri - L\frac{di}{dt} \right) dt$$

Here, x is a stroke, $\alpha$ is a motor constant, Vm is a motor voltage, R is a resistance, L is an inductance, and i is a motor current.

The control unit 50 receives a first stroke instruction value (xref1) and compares a first stroke estimate value (x1) calculated by the first stroke calculation unit 613 with the first stroke instruction value. The control unit compares the first stroke estimate value with the first stroke instruction value, and generates an inverter control signal for controlling switching elements (S1 to S4) based on the comparison result. In addition, the control unit receives a second stroke instruction value (xref2) and compares a second stroke estimate value (x2) calculated by the second stroke calculation unit 623 with the second stroke instruction value. The control unit compares the second stroke estimate value with the second stroke instruction value, and generates an inverter control signal for controlling switching elements (S3 to S6) based on the comparison result. The compressor control apparatus may further include a drive unit for selecting switching elements connected to the first compressor or switching elements connected to the second compressor based on the inverter control signal to generate drive signals for them, namely, a switching circuit or element for opening or closing a switching element within the inverter. The compressor control apparatus typically performs sensorless control, and the detailed description thereof will be omitted.

The first and the second load detection unit 61, 62 may detect a load on the first compressor (C1) and the second compressor (C2), respectively, using the motor drive current, the motor drive voltage, or the first and the second stroke. The control unit 50 independently operates the first compressor and the second compressor based on the load on the first compressor and the second compressor detected through the first load detection unit and the second load detection unit.

The size of the compressor load may be detected using a phase difference between the motor current and stroke estimate value, and a phase difference between the motor voltage and stroke estimate value. Furthermore, the size of the compressor load may be detected using a gas spring constant (Kg). In addition, the size of the compressor load may be detected using a gas damping constant (Cg).

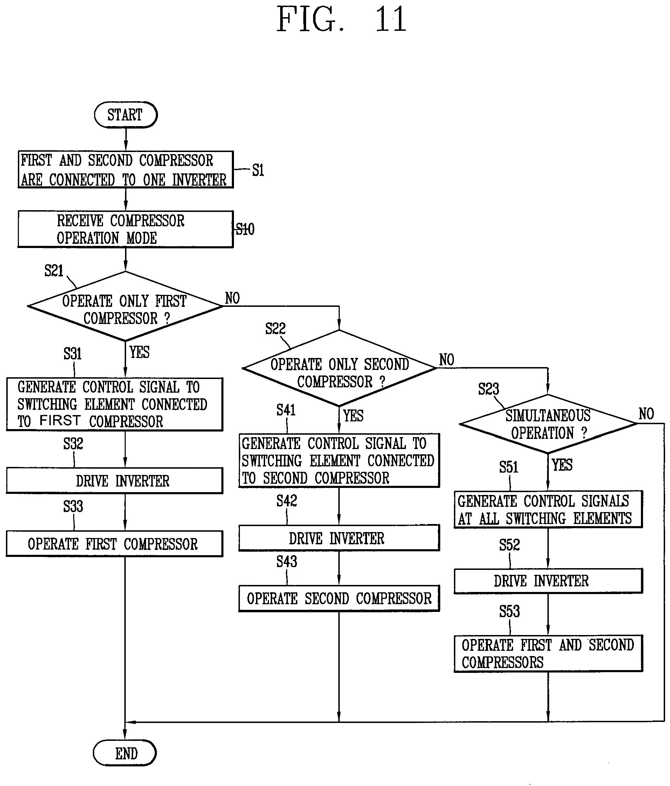

Referring to FIG. 11, a compressor control method according to an embodiment may control a first compressor and a second compressor using one inverter. The control method may include receiving a compressor operation mode (S10), and driving part of all of the switching elements within the one inverter based on the compressor operation mode (S21 and below). Here, the compressor operation mode is a mode determined by a load or required freezing capacity of the first and the second compressor. The compressor operation mode may control a compression amount or the like of each compressor, but merely divided into a mode of operating only the first compressor, a mode of operating only the second compressor, and a mode of operating the first and the second compressor in a simultaneous manner. Hereinafter, the configuration of the apparatus will be described with reference to FIGS. 1 and 2.

The driving step may include inputting a control signal to part of all of the switching elements within the one inverter to drive them (S31, S41, S42). Furthermore, the driving step may further include controlling the operation of the first compressor or the second compressor or the first and the second compressor connected to the driven switching elements (S33, S43, S53).

First, the first and the second compressor are connected to switching elements within one inverter, respectively (S1). Then, it is determined whether to operate only the first compressor, operate only the second compressor, or operate the first and the second compressor in a simultaneous manner (S21, S22, S23).

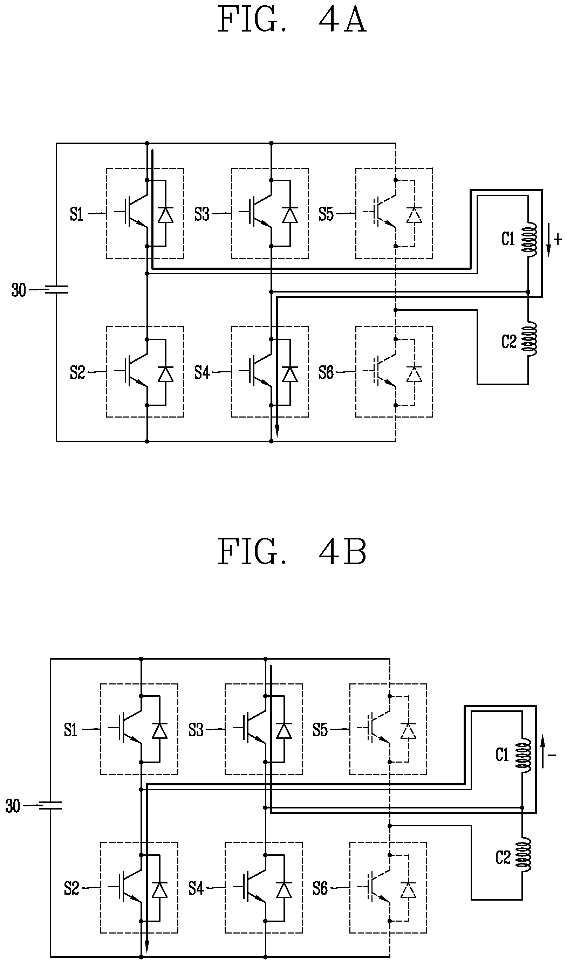

Hereinafter, the operation of operating the first and the second compressor will be described with reference to FIGS. 4A through 10.

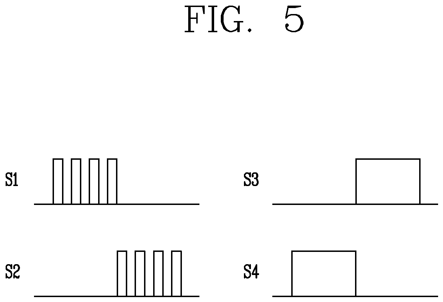

The operation of controlling the working of the first compressor (C1) using switching elements (S1, S2, S3, S4) within the inverter 40 will be described with reference to FIGS. 4A and 4B (S21). The first compressor (C1) is connected to switching elements (S1, S2, S3, S4) of the inverter 40. When the control unit 50 generates a control signal for operating only the first compressor based on a compressor operation mode (S31), the switching elements are driven based on the control signal (S32). Referring to FIG. 4A, a positive (+) current of the first compressor flows through switching elements S1 and S4. Meanwhile, referring to FIG. 4B, a negative (-) current of the first compressor flows through switching elements S2 and S3. Referring to FIG. 5, a drive signal for a pair of switching elements (S3, S4) commonly connected to the second compressor (C2) has an operating frequency (for example, 60 Hz). On the other hand, a drive signal for the other switching elements (S1, S2) has a carrier frequency (for example, 3 kHz) for the first compressor.

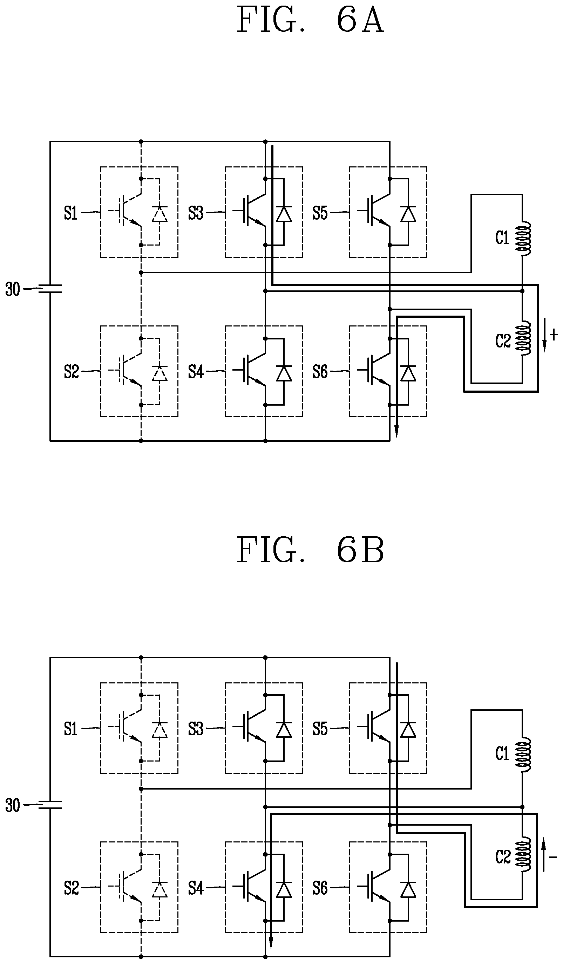

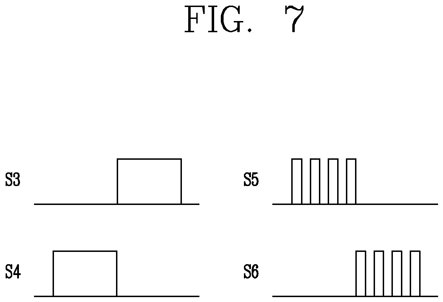

The operation of controlling the working of the second compressor (C2) using switching elements (S3, S4, S5, S6) within the inverter 40 will be described with reference to FIGS. 6A and 6B (S22). The second compressor (C2) is connected to switching elements (S3, S4, S5, S6) of the inverter 40. When the control unit 50 generates a control signal for operating only the second compressor based on a compressor operation mode (S41), the switching elements are driven based on the control signal (S42). Referring to FIG. 6A, a positive (+) current of the second compressor flows through switching elements S3 and S6. Meanwhile, referring to FIG. 6B, a negative (-) current of the second compressor flows through switching elements S4 and S5. Referring to FIG. 7, a drive signal for a pair of switching elements (S3, S4) commonly connected to the first compressor (C1) has an operating frequency (for example, 60 Hz). On the other hand, the other switching elements (S5, S6) are switched at a carrier frequency (for example, 3 kHz) for the second compressor.

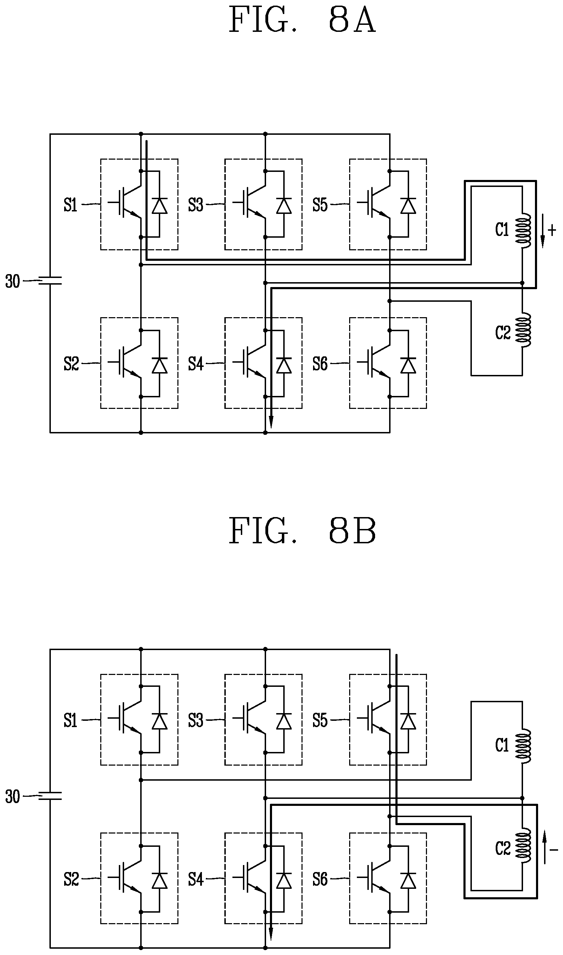

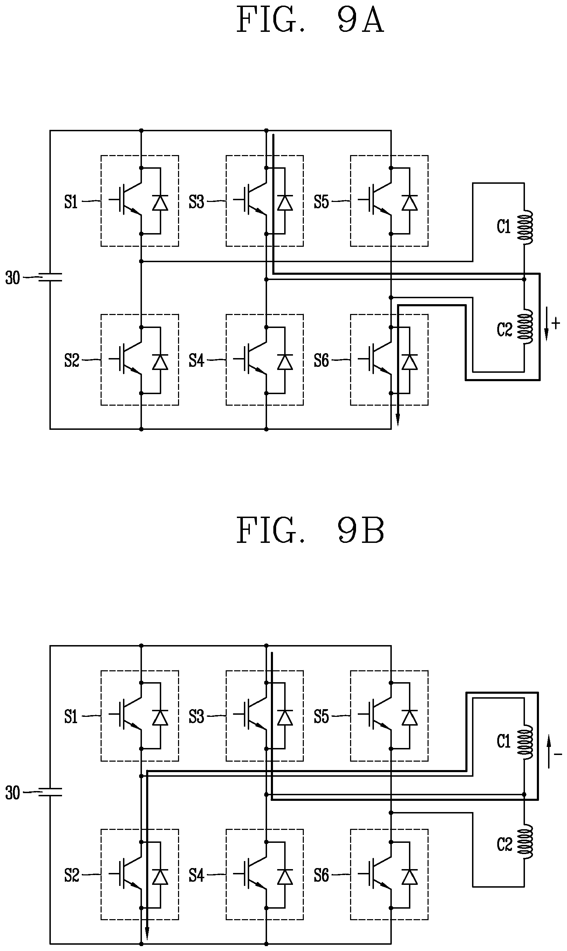

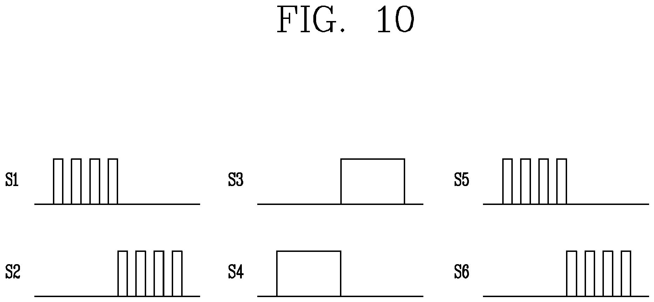

The operation of controlling the working of the first and the second compressor using switching elements (S1 to S6) within the inverter 40 will be described with reference to FIGS. 8A through 9B (S23). The current control of the first compressor (C1) in the positive (+) direction is carried out using switching element S1 (FIG. 8A), and the current control of the second compressor (C2) in the negative (-) direction is carried out using switching element S5 (FIG. 8B). At this time, a common current flows through switching element S4. Meanwhile, the current control of the first compressor (C1) in the negative (-) direction is carried out using switching element S2 (FIG. 9B), and the current control of the second compressor (C2) in the positive (+) direction is carried out using switching element S6 (FIG. 9A). At this time, a common current flows through switching element S3. In other words, as illustrated in FIGS. 8 and 9, the current directions flowing through the first compressor (C1) and second compressor (C2) are opposite to each other. Referring to FIG. 10, a pair of switching elements (S3, S4) commonly used for the first compressor (C1) and second compressor (C2) are switched at an operating frequency (for example, 60 Hz) whereas the other switching elements (S1, S2, S5, S6) are switched at a carrier frequency for each of them. Here, carrier frequencies for the first and the second compressor may be the same (for example, 3 kHz), but may be also different frequencies (for example, 2 kHz at S1, S2 for the first compressor, and 3 kHz at S5, S6 for the second compressor).

As described above, in a compressor control apparatus and a refrigerator including the same according to the embodiments of the present disclosure, the operation of two compressors may be controlled using one inverter, thereby minimizing the use of elements as well as increasing the compressor capacity and enhancing the operation efficiency of a system. According to the embodiments of the present disclosure, a plurality of operation modes may be used to correspond to a load or freezing capacity using two compressors, Furthermore, according to the present disclosure, two compressors are operated in a separate or simultaneous manner using one inverter, thereby simplifying the configuration of a system to reduce the cost. Moreover, according to the embodiments of the present disclosure, switching elements commonly used may be switched at an operating frequency contrary to the other switching elements in operating two compressors using one inverter, thereby allowing the simultaneous operation of two compressors, reducing the switching loss, and improving the efficiency and stability of a system.

**Claims**

1. A compressor control apparatus, comprising:

   one inverter (40) provided with three pairs of switching elements in which one pair of the three pairs of switching elements is commonly connected to a first and a second compressor (C1, C2), and switched based on drive signals for each pair of switching elements, wherein a drive signal for one pair of the three pairs of switching elements has an operation frequency of the first and the second compressor (C1, C2), and drive signals for the other pairs of switching elements have carrier frequencies of the first and the second compressor (C1, C2), respectively;

a control unit (50) configured to generate an inverter control signal configured with the drive signals based on a load state of the first and the second compressor (C1, C2) and output it to the one inverter (40); and

a drive unit (70) configured to receive the inverter control signal and output the drive signals to the one inverter (40),

wherein the carrier frequencies have a higher frequency than the operation frequency.

2. The compressor control apparatus of claim 1, further comprising:

a converter (20) configured to rectify commercial alternating current power to direct current power;

a smoothing unit (30) configured to smoothen and store the rectified direct current power.

3. The compressor control apparatus of claim 1, wherein the control unit (50) is adapted to connect the first and the second compressor (C1, C2) to two pairs of switching elements, respectively, and to operate the first and the second compressor (C1, C2) in a simultaneous or separate manner.

4. The compressor control apparatus as claimed in any one of the preceding claims, further comprising at least one of
a first and a second current detection unit (611, 621) configured to detect a first and a second motor drive current applied to a first and a second motor provided in the first and the second compressor (C1, C2), respectively; and
a first and a second voltage detection unit (612, 622) configured to detect a first and a second motor drive voltage applied to the first and the second motor.

5. The compressor control apparatus of claim 4, further comprising:
a first and a second stroke calculation unit configured to calculate a first and second stroke of the first and the second compressor (C1, C2), respectively, using the first and the second motor drive current and the first and the second motor drive voltage.

6. The compressor control apparatus of claim 1, further comprising:
a first and a second load detection unit configured to detect a load for the first and the second compressor (C1, C2), respectively.

7. The compressor control apparatus of claim 1, wherein the first or the second compressor (C1, C2) is a linear compressor.

8. A refrigerator, comprising:

a refrigerator body;
a first and a second compressor (C1, C2) provided in the refrigerator body to compress refrigerant, respectively;
a compressor control apparatus according to claim 1;
a first and a second load detection unit (61, 62) configured to detect a load of the first and the second compressor (C1, C2).

9. A compressor control method of controlling a first and a second compressor (C1, C2) using one inverter (40) provided with three pairs of switching elements in which one pair of the three pairs of switching elements is commonly connected to the first and the second compressor (C1, C2), and switched based on drive signals for each pair of switching elements, wherein a drive unit (70) receives an inverter control signal and outputs the drive signals to the one inverter (40), and wherein a drive signal for one pair of the three pairs of switching elements has an operation frequency of the first and the second compressor (C1, C2), and drive signals for the other pairs of switching elements have carrier frequencies of the first and the second compressor (C1, C2), respectively, the method comprising:

receiving (S10) a compressor operation mode; and
driving (S32, S42, S52) part or all of the switching elements within the one inverter (40) based on the compressor operation mode,
wherein the carrier frequencies have a higher frequency than the operation frequency.

10. The method of claim 9, wherein the compressor operation mode is an operation mode determined by a load or required freezing capacity of the first and the second compressor (C1, C2), and comprises at least one of a mode of operating only the first compressor (C1), a mode of operating only the second compressor (C2), and a mode of operating the first and the second compressor (C1, C2) in a simultaneous manner.

11. The method of claim 9, wherein said driving step comprises:

inputting a control signal to part of all of the switching elements within the one inverter (40) to drive them; and
controlling the operation of the first compressor (C1) or the second compressor (C2) or the first and the second compressor (C1, C2) connected to the driven switching elements.

12. The compressor control apparatus of claim 1, wherein when one of the first and the second compressor (C1, C2) is operative while the other of the first and the second compressor (C1, C2) is inoperative, the control unit (50) does not generate the drive signal for one pair of the other pairs of switching elements.

13. The compressor control apparatus of claim 1, wherein the carrier frequencies of the first and the second compressor (C1, C2) are different from each other.

**Patentansprüche**

1. Kompressorsteuervorrichtung, die Folgendes umfasst:

einen Wechselrichter (40), der mit drei Paaren Schaltelementen versehen ist, wovon ein Paar der drei Paare Schaltelemente gewöhnlich mit einem ersten und einem zweiten Kompressor (C1, C2) verbunden ist, und auf der Grundlage von Ansteuersignalen für jedes Paar Schaltelemente geschaltet wird, wobei ein Ansteuersignal für ein Paar der drei Paare Schaltelemente die Betriebsfrequenz des ersten und des zweiten Kompressors (C1, C2) besitzt und Ansteuersignale für die weiteren Paare Schaltelemente die Trägerfrequenzen des ersten bzw. des zweiten Kompressors (C1, C2) besitzen;
eine Steuereinheit (50), die konfiguriert ist, ein Wechselrichtersteuersignal, das mit den Ansteuersignalen auf der Grundlage eines Lastzustands des ersten und des zweiten Kompressors (C1, C2) konfiguriert ist, zu erzeugen und es zu dem einen Wechselrichter (40) auszugeben; und
eine Ansteuereinheit (70), die konfiguriert ist, das Wechselrichtersteuersignal zu empfangen und die Ansteuersignale zu dem einen Wechselrichter (40) auszugeben, wobei die Trägerfrequenzen eine höhere Frequenz als die Betriebsfrequenz besitzen.

2. Kompressorsteuervorrichtung nach Anspruch 1, die ferner Folgendes umfasst:

einen Umrichter (20), der konfiguriert ist, Netzwechselstromleistung in Gleichstromleistung gleichzurichten; und
eine Glättungseinheit (30), die konfiguriert ist, die gleichgerichtete Gleichstromleistung zu glätten und zu speichern.

3. Kompressorsteuervorrichtung nach Anspruch 1, wobei die Steuereinheit (50) ausgelegt ist, den ersten bzw. den zweiten Kompressor (C1, C2) mit zwei Paaren Schaltelementen zu verbinden und den ersten und den zweiten Kompressor (C1, C2) in einer gleichzeitigen oder getrennten Weise zu betreiben.

4. Kompressorsteuervorrichtung nach einem der vorhergehenden Ansprüche, die ferner Folgendes umfasst:

eine erste und eine zweite Stromdetektionseinheit (611, 621), die konfiguriert sind, einen ersten und einen zweiten Motoransteuerstrom, die an einen ersten und einen zweiten Motor, die im ersten bzw. im zweiten Kompressor (C1, C2) vorgesehen sind, angelegt werden, zu detektieren; und/oder
eine erste und eine zweite Spannungsdetektionseinheit (612, 622), die konfiguriert sind, eine erste und eine zweite Motoransteuerspannung, die an den ersten und den zweiten Motor angelegt werden, zu detektieren.

5. Kompressorsteuervorrichtung nach Anspruch 4, die ferner Folgendes umfasst:
eine erste und eine zweite Hubberechnungseinheit, die konfiguriert sind, einen ersten und einen zweiten Hub des ersten bzw. des zweiten Kompressors (C1, C2) unter Verwendung des ersten und des zweiten Motoransteuerstroms und der ersten und der zweiten Motoransteuerspannung zu berechnen.

6. Kompressorsteuervorrichtung nach Anspruch 1, die ferner Folgendes umfasst:
eine erste und eine zweite Lastdetektionseinheit, die konfiguriert sind, eine Last für den ersten bzw. den zweiten Kompressor (C1, C2) zu berechnen.

7. Kompressorsteuervorrichtung nach Anspruch 1, wobei der erste und der zweite Kompressor (C1, C2) Linearverdichter sind.

8. Kühleinrichtung, die Folgendes umfasst:

einen Kühleinrichtungskörper;
einen ersten bzw. einen zweiten Kompressor (C1, C2), die im Kühleinrichtungskörper vorgesehen sind, um ein Kältemittel zu komprimieren;
eine Kompressorsteuervorrichtung nach Anspruch 1 und
eine erste und eine zweite Lastdetektionseinheit (61, 62), die konfiguriert sind, eine Last des ersten und des zweiten Kompressors (C1, C2) zu detektieren.

9. Kompressorsteuerverfahren zum Steuern eines ersten und eines zweiten Kompressors (C1, C2) unter Verwendung eines Wechselrichters (40), der mit drei Paaren Schaltelementen versehen ist, in denen ein Paar der drei Paare Schaltelemente gewöhnlich mit dem ersten und dem zweiten Kompressor (C1, C2) verbunden ist, und auf der Grundlage von Ansteuersignalen für jedes Paar Schaltelemente geschaltet wird, wobei eine Ansteuereinheit (70) ein Wechselrichtersteuersignal aufnimmt und die Ansteuersignale zu dem einen Wechselrichter (40) ausgibt und ein Ansteuersignal für ein Paar der drei Paare Schaltelemente die Betriebsfrequenz des ersten und des zweiten Kompressors (C1, C2) besitzt und Ansteuersignale für die weiteren Paare Schaltelemente die Trägerfrequenzen des ersten bzw. des zweiten Kompressors (C1, C2) besitzen, wobei das Verfahren Folgendes umfasst:

Aufnehmen (S10) eines Kompressorbetriebsmodus und

Ansteuern (S32, S42, S52) eines Teils der oder aller Schaltelemente in dem einen Wechselrichter (40) auf der Grundlage des Kompressorbetriebsmodus, wobei

die Trägerfrequenzen eine höhere Frequenz als die Betriebsfrequenz besitzen.

10. Verfahren nach Anspruch 9, wobei der Kompressorbetriebsmodus ein Betriebsmodus ist, der durch eine Last oder eine erforderliche Gefrierkapazität des ersten und des zweiten Kompressors (C1, C2) bestimmt wird und einen Modus des Betreibens lediglich des ersten Kompressors (C1), einen Modus des Betreibens lediglich des zweiten Kompressors (C2) und/oder einen Modus des Betreibens des ersten und des zweiten Kompressors (C1, C2) in einer gleichzeitigen Weise umfasst.

11. Verfahren nach Anspruch 9, wobei der Ansteuerschritt Folgendes umfasst:

Eingeben eines Steuersignals in einen Teil aller Schaltelemente in dem einen Wechselrichter (40), um sie anzusteuern; und
Steuern des Betriebs des ersten Kompressors (C1), des zweiten Kompressors (C2) oder des ersten und des zweiten Kompressors (C1, C2), die mit den angesteuerten Schaltelementen verbunden sind.

12. Kompressorsteuervorrichtung nach Anspruch 1, wobei dann, wenn der erste oder der zweite Kompressor (C1, C2) in Betrieb ist, während der andere des ersten und des zweiten Kompressors (C1, C2) nicht in Betrieb ist, die Steuereinheit (50) das Ansteuersignals für ein Paar der weiteren Paare Schaltelemente nicht erzeugt.

13. Kompressorsteuervorrichtung nach Anspruch 1, wobei die Trägerfrequenzen des ersten und des zweiten Kompressors (C1, C2) voneinander verschieden sind.

## Revendications

1. Appareil de commande de compresseur, comprenant :

un onduleur (40) pourvu de trois paires d'éléments de commutation, l'une des trois paires d'éléments de commutation étant raccordée en commun à des premier et deuxième compresseurs (C1, C2), et commuté sur la base de signaux d'entraînement pour chaque paire d'éléments de commutation, dans lequel un signal d'entraînement pour une paire parmi les trois paires d'éléments de commutation a une fréquence de fonctionnement des premier et deuxième compresseurs (C1, C2), et des signaux d'entraînement pour les autres paires d'éléments de commutation ont des fréquences de porteuse respectivement des premier et deuxième compresseurs (C1, C2) ;
une unité de commande (50) configurée pour générer un signal de commande d'onduleur configuré avec les signaux d'entraînement sur la base d'un état de charge des premier et deuxième compresseurs (C1, C2) et pour le délivrer à l'onduleur (40) ; et
une unité d'entraînement (70) configurée pour recevoir le signal de commande d'onduleur et pour délivrer les signaux d'entraînement à l'onduleur (40),
dans lequel les fréquences de porteuse ont une fréquence supérieure à la fréquence de fonctionnement.

2. Appareil de commande de compresseur selon la revendication 1, comprenant en outre :

un convertisseur (20) configuré pour redresser une puissance de courant alternatif commercial en puissance de courant continu ;
une unité de lissage (30) configurée pour lisser et stocker la puissance de courant continu redressée.

3. Appareil de commande de compresseur selon la revendication 1, dans lequel l'unité de commande (50) est apte à raccorder les premier et deuxième compresseurs (C1, C2) respectivement à deux paires d'éléments de commutation, et à faire fonctionner les premier et deuxième compresseurs (C1, C2) d'une manière simultanée ou séparée.

4. Appareil de commande de compresseur selon l'une quelconque des revendications précédentes, comprenant en outre au moins l'une de :

des première et deuxième unités de détection de courant (611, 621) configurées pour détecter des premier et deuxième courants d'entraînement de moteur appliqués à des premier et deuxième moteurs prévus respectivement dans les premier et deuxième compresseurs (C1, C2) ; et

des première et deuxième unités de détection de tension (612, 622) configurées pour détecter des première et deuxième tensions d'entraînement de moteur appliquées aux premier et deuxième moteurs.

5. Appareil de commande de compresseur selon la revendication 4, comprenant en outre :

des première et deuxième unités de calcul de course configurées pour calculer des première et deuxième courses respectivement des premier et deuxième compresseurs (C1, C2), en utilisant les premier et deuxième courants d'entraînement de moteur et les première et deuxième tensions d'entraînement de moteur.

6. Appareil de commande de compresseur selon la revendication 1, comprenant en outre :
des première et deuxième unités de détection de charge configurées pour détecter une charge respectivement pour les premier et deuxième compresseurs (C1, C2).

7. Appareil de commande de compresseur selon la revendication 1, dans lequel le premier ou deuxième compresseur (C1, C2) est un compresseur linéaire.

8. Réfrigérateur, comprenant :

un corps de réfrigérateur ;
des premier et deuxième compresseurs (C1, C2) respectivement prévus dans le corps de réfrigérateur pour comprimer un frigorigène ;
un appareil de commande de compresseur selon la revendication 1 ;
des première et deuxième unités de détection de charge (61, 62) configurées pour détecter une charge des premier et deuxième compresseurs (C1, C2).

9. Procédé de commande de compresseur consistant à commander des premier et deuxième compresseurs (C1, C2) en utilisant un onduleur (40) pourvu de trois paires d'éléments de commutation, l'une des trois paires d'éléments de commutation étant raccordée en commun aux premier et deuxième compresseurs (C1, C2), et commuté sur la base de signaux d'entraînement pour chaque paire d'éléments de commutation, dans lequel une unité d'entraînement (70) reçoit un signal de commande d'onduleur et délivre les signaux d'entraînement à l'onduleur (40), et dans lequel un signal d'entraînement pour une paire parmi les trois paires d'éléments de commutation a une fréquence de fonctionnement des premier et deuxième compresseurs (C1, C2), et des signaux d'entraînement pour les autres paires d'éléments de commutation ont des fréquences de porteuse respectivement des premier et deuxième compresseurs (C1, C2), le procédé comprenant :

la réception (S10) d'un mode de fonctionnement de compresseur ; et
l'entraînement (S32, S42, S52) d'une partie ou de l'intégralité des éléments de commutation à l'intérieur de l'onduleur (40) sur la base du mode de fonctionnement de compresseur,
dans lequel les fréquences de porteuse ont une fréquence supérieure à la fréquence de fonctionnement.

10. Procédé selon la revendication 9, dans lequel le mode de fonctionnement de compresseur est un mode de fonctionnement déterminé par une charge ou une capacité de congélation nécessaire des premier et deuxième compresseurs (C1, C2), et comprend au moins l'un d'un mode de fonctionnement uniquement du premier compresseur (C1), d'un mode de fonctionnement uniquement du deuxième compresseur (C2), et d'un mode de fonctionnement des premier et deuxième compresseurs (C1, C2) d'une manière simultanée.

11. Procédé selon la revendication 9, dans lequel ladite étape d'entraînement comprend :

l'entrée d'un signal de commande dans une partie de l'intégralité des éléments de commutation à l'intérieur de l'onduleur (40) pour les entraîner ; et
la commande du fonctionnement du premier compresseur (C1) ou du deuxième compresseur (C2) ou des premier et deuxième compresseurs (C1, C2) raccordés aux éléments de commutation entraînés.

12. Appareil de commande de compresseur selon la revendication 1, dans lequel, lorsque l'un des premier et deuxième compresseurs (C1, C2) est opérationnel pendant que l'autre des premier et deuxième compresseurs (C1, C2) est non opérationnel, l'unité de commande (50) ne génère pas le signal d'entraînement pour une paire parmi les autres paires d'éléments de commutation.

13. Appareil de commande de compresseur selon la revendication 1, dans lequel les fréquences de porteuse des premier et deuxième compresseurs (C1, C2) sont différentes l'une de l'autre.

# FIG. 1

# FIG. 2

# FIG. 3

# FIG. 4A

# FIG. 4B

# FIG. 5

# FIG. 6A

# FIG. 6B

# FIG. 7

S3

S4

S5

S6

# FIG. 8A

# FIG. 8B

# FIG. 9A

# FIG. 9B

# FIG. 10

# FIG. 11

```
                        ┌─────────┐
                        │  START  │
                        └────┬────┘
                             │
            ┌────────────────────────────────┐
            │ FIRST AND SECOND COMPRESSOR     │── S1
            │ ARE CONNECTED TO ONE INVERTER   │
            └────────────────┬───────────────┘
                             │
              ┌──────────────────────────┐
              │ RECEIVE COMPRESSOR        │ S10
              │ OPERATION MODE            │
              └────────────┬─────────────┘
                           │
   S21                     │
        ◇───────────────────────────◇  NO
        < OPERATE ONLY FIRST         >──────────────┐
        <   COMPRESSOR ?             >              │
        ◇───────────────────────────◇              │
   S31            │ YES                   S22        ▼
                  │                          ◇──────────────◇  NO
┌─────────────────────────────┐              < OPERATE ONLY SECOND >──────────────┐
│ GENERATE CONTROL SIGNAL TO   │             <   COMPRESSOR ?      >              │
│ SWITCHING ELEMENT CONNECTED  │              ◇──────────────◇       S23          ▼
│ TO FIRST COMPRESSOR          │         S41        │ YES               ◇──────────────◇  NO
└──────────────┬──────────────┘                     │              < SIMULTANEOUS  >──────┐
   S32         │                     ┌──────────────────────────────┐  < OPERATION ?    >      │
┌─────────────────────────────┐      │ GENERATE CONTROL SIGNAL TO   │   ◇──────────────◇      │
│      DRIVE INVERTER          │      │ SWITCHING ELEMENT CONNECTED  │   S51    │ YES          │
└──────────────┬──────────────┘      │ TO SECOND COMPRESSOR         │          │              │
   S33         │                     └──────────────┬──────────────┘  ┌─────────────────────┐ │
┌─────────────────────────────┐         S42         │                 │ GENERATE CONTROL     │ │
│   OPERATE FIRST COMPRESSOR   │      ┌──────────────────────────────┐ │ SIGNALS AT ALL       │ │
└──────────────┬──────────────┘      │      DRIVE INVERTER          │ │ SWITCHING ELEMENTS   │ │
                                      └──────────────┬──────────────┘ └──────────┬──────────┘ │
                                         S43         │                   S52      │            │
                                      ┌──────────────────────────────┐ ┌─────────────────────┐ │
                                      │  OPERATE SECOND COMPRESSOR   │ │   DRIVE INVERTER     │ │
                                      └──────────────┬──────────────┘ └──────────┬──────────┘ │
                                                                         S53      │            │
                                                                      ┌─────────────────────┐ │
                                                                      │ OPERATE FIRST AND    │ │
                                                                      │ SECOND COMPRESSORS   │ │
                                                                      └──────────┬──────────┘ │
                        ┌─────────┐                                               │            │
                        │   END   │───────────────────────────────────────────────────────────┘
                        └─────────┘
```

FIG. 12

# FIG. 13

**EP 2 620 722 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020050111283